# EUROPÄISCHE PATENTSCHRIFT

(11) **EP 1 117 913 B1**
(45) Veröffentlichungstag und Bekanntmachung des Hinweises auf die Patenterteilung: **04.06.2003**
(21) Anmeldenummer: 99955734.1
(22) Anmeldetag: 17.09.1999
(51) Int. Cl.: F02C 7/224, F02C 7/16, F01D 5/18

(54) **BRENNSTOFFVORWÄRMUNG IN EINER GASTURBINE**
FUEL PREHEATING IN A GAS TURBINE
PRECHAUFFAGE DU COMBUSTIBLE DANS UNE TURBINE A GAZ

(30) Priorität: 24.09.1998 DE 19843906
(43) Veröffentlichungstag der Anmeldung: 25.07.2001
(73) Patentinhaber: SIEMENS AKTIENGESELLSCHAFT, 80333 München (DE)
(72) Erfinder: WERNER, Klaus, D-47574 Goch (DE)
(86) Internationale Anmeldenummer: DE9902985
(87) Internationale Veröffentlichungsnummer: WO00017504

(56) Entgegenhaltungen:
- DE-A- 19 621 385
- DE-A- 19 716 721
- US-A- 2 647 368
- US-A- 2 783 613
- US-A- 3 600 890
- US-A- 3 734 639

## Beschreibung

Der Gegenstand der Erfindung betrifft ein Verfahren zum Betreiben einer Gasturbine mit einer Brennkammer, einer zumindest zwei Reihen von Schaufeln umfassenden Turbine und einem Luftverdichter, wobei der Brennkammer verdichtete Luft und Brennstoff und der Turbine Kühlluft zugeführt werden. Die Erfindung betrifft außerdem eine insbesondere nach diesem Verfahren arbeitende Gasturbine.

Die Erfindung bezieht sich dabei insbesondere auf eine Gasturbine, die im Verbund mit einer Dampfturbine arbeitet, derart, daß Abgas, welches der Gasturbine entströmt, zur Bereitstellung von hochgespanntem Dampf genutzt wird, welcher in der Dampfturbine unter Leistung mechanischer Arbeit entspannt wird. Solche Verbunde aus Gasturbinen und Dampfturbinen werden beispielsweise in sogenannten Kombi-Kraftwerken realisiert; sie erlauben die Erzeugung elektrischen Stroms mit Wirkungsgraden von 50% und mehr.

Eine Gasturbine ist generell ein Verbund aus einem Verdichter für Luft, zumindest einer Brennkammer zur Verbrennung eines Brennstoffes mit der vom Verdichter komprimierten Luft und einer Turbine im eigentlichen Sinn, worin das in der Brennkammer erzeugte heiße Rauchgas arbeitsleistend entspannt wird. In der Regel sind der Verdichter und die Turbine miteinander mechanisch verkoppelt. Häufig ist der Luftverdichter ein Turboverdichter.

Üblicherweise werden beim Betrieb einer Gasturbine die Schaufeln der Turbine gekühlt. Dazu ist aus einer Vielzahl von Dokumenten bekannt, ein offenes Kühlsystem zur Ausbildung einer Filmkühlung mit Kühlluft vorzusehen, welches die zur Kühlung verwendete Kühlluft durch die Schaufeln der Turbine führt. Dabei wird ein Teil der verdichteten Luft als Kühlluft verwendet, die dann in der Turbine aus offenen Schaufeln austritt und dem Rauchgasstrom zugemischt wird. Infolge des Abströmens der Kühlluft aus Leit- und/oder Laufschaufeln führt die offene Luftkühlung der Schaufeln zu einem Absenken der Temperatur der Rauchgase innerhalb und abströmseitig hinter der Turbine. Dies vermindert den Wirkungsgrad der Gasturbine.

Der thermodynamische Wirkungsgrad eines Verbundes aus einer Gas- und einer Dampfturbine ist zudem nicht nur bestimmt durch den Wirkungsgrad von Gas- oder Dampfturbine, sondern in starkem Maße auch abhängig von der thermodynamischen Verkoppelung der beiden Maschinen. Eine wesentliche Bestimmungsgröße ist dabei die Temperatur des der Gasturbine entströmenden Abgases.

Zur Erreichung eines hohen Wirkungsgrades ist es bekannt, die verdichtete Luft durch indirekten Wärmeaustausch mit dem Abgas aus der Turbine aufzuheizen.

Zur Erhöhung der Abgastemperatur ist in der DE 43 30 613 A1 ein Konzept für eine Leitschaufel einer Gasturbine beschrieben, das in einem offenen Kühlsystem mit der Kühlluft einen geringen Anteil an Brennstoff unmittelbar zur Turbine zuführt, wodurch eine Zwischenerhitzung des Abgases ohne aufwendige apparative Maßnahmen erreicht wird, was zu einer Steigerung des Wirkungsgrades führt.

Gleichfalls wirkungsgradsteigernd sind Kühlkonzepte, die statt in einem offenen System in einem geschlossenen System Kühlfluid führen.

Beispielsweise aus der DE 196 21 385 A1 ist es bekannt, in einem geschlossenen Kühlsystem in einer Leitschaufel und einer Laufschaufel einen ersten Stoff zur Kühlung der Leitschaufeln zu führen, welcher mit einem zweiten Stoff endotherm reagiert. Die für eine endotherme Reaktion benötigte Energie kann vorzugsweise durch Aufnahme von Wärme aus dem heißen Rauchgasstrom erfolgen. Das Reaktionsprodukt wird anschließend der Brennkammer zugeführt, wobei die chemisch eingebundene Reaktionsenergie sowie von den Stoffen aufgenommene Wärme in dem Verbrennungsprozeß freigesetzt werden. Dies bewirkt eine Verminderung des Brennstoffverbrauchs und demzufolge eine Erhöhung des Wirkungsgrades der Gasturbine.

Der Erfindung liegt die Aufgabe zugrunde, ein Verfahren zum Betreiben einer Gasturbine anzugeben, mit dem bei guter Kühlung der Schaufeln der Turbine ein gesteigerter Wirkungsgrad erzielt wird. Weiterhin soll eine, insbesondere zur Durchführung des Verfahrens, geeignete Gasturbine mit hohem Wirkungsgrad angegeben werden.

Bezüglich des Verfahrens wird diese Aufgabe erfindungsgemäß durch die Merkmale des Anspruchs 1 gelöst, indem wenigstens ein Teil des Brennstoffes vor seiner Einleitung in die Brennkammer im Innenraum der Schaufeln ausgebildete Hohlräume zumindest in einem Teilbereich der Schaufeln durchströmt und dabei gleichzeitig vorgewärmt wird, und daß die der Turbine zugeführte Kühlluft im Innenraum der Schaufeln ausgebildete zweite Hohlräume in einem weiteren Teilbereich der Schaufeln durchströmt und wenigstens teilweise an den Schaufeln austritt. Die so von dem Brennstoff aufgenommene thermische Energie braucht in vorteilhafter Weise nicht mehr über ein Kühlfluid, beispielsweise Kühlluft, abgeführt zu werden. Die so eingesparte Kühlluft vermindert die Arbeit des Luftverdichters, die sonst von der Turbine aufgebracht werden müßte. Außerdem gelangt vorgewärmter Brennstoff in die Brennkammer. Demzufolge wird der Wirkungsgrad der Gasturbine erhöht.

Erfindungsgemäß bevorzugt bilden die in den Schaufeln ausgebildeten Hohlräume, in denen der Bennstoff strömt, ein gegenüber dem Inneren der Gasturbine geschlossenes System. Dadurch ist gewährleistet, daß der Brennstoff nicht mit anderen Strömungsmedien in Berührung kommt wie beispielsweise einem Kühlfluid oder dem Rauchgas (Aktionsfluid). Insbesondere sind durch das geschlossene System unkontrollierte Verbrennungen außerhalb der Brennkammer ausgeschlossen.

Eine einfachste Ausführungsform zeichnet sich dadurch aus, daß der Brennstoff nacheinander mehrere, insbesondere alle, Reihen von Schaufeln durchströmt und anschließend der Brennkammer zugeführt wird.

In einer alternativen Ausführungsform wird der Brennstoff separat, d. h. in getrennten Strömen durch mehrere Reihen von Schaufeln und anschließend jeweils getrennt oder als einheitlicher Strom der Brennkammer zugeführt. Eine solche Zuführung des Brennstoffs ermöglicht in vorteilhafter Weise eine lastabhängige Steuer- und Regelung der Gasturbine.

Erfindungsgemäß durchströmt die der Turbine zugeführte Kühlluft andere, im Innenraum der Schaufeln ausgebildete Hohlräume in einem weiteren Teilbereich der Schaufeln und tritt wenigstens teilweise an den Schaufeln in bevorzugter Weise so aus, daß sich auf der Außenfläche der Schaufeln ein Luftfilm ausbildet.

Zur Temperaturerhöhung des aus der Turbine ausströmenden Abgases können vorzugsweise der Kühlluft geringe Anteile an Brennstoff beigemischt werden, die in der Turbine verbrennen.

Bezüglich der Gasturbine, die eine Brennkammer, eine zumindest zwei Reihen von Schaufeln umfassende Turbine und einen Luftverdichter sowie eine Brennluftleitung zum Zuführen von verdichteter Luft und wenigstens eine Brennstoffleitung zum Zuführen von Brennstoff in die Brennkammer sowie wenigstens eine Kühlluftleitung zum Zuführen von Kühlluft in die Turbine umfaßt, wird die genannte Aufgabe erfindungsgemäß dadurch gelöst, daß wenigstens ein Teil des Brennstoffes von einer Versorgungseinheit durch im Innenraum der Schaufeln ausgebildete Hohlräume, welche zumindest in einem Teilbereich der Schaufeln ein gegenüber dem Inneren der Gasturbine geschlossenes System bilden, zur Brennkammer geführt ist.

In einer einfachen Ausführungsform ist der Brennstoff vorzugsweise nacheinander durch mehrere, insbesondere durch alle, Reihen von Schaufeln der Turbine der Brennkammer zugeführt.

Alternativ ist der Brennstoff bevorzugt separat durch mehrere Reihen von Schaufeln und anschließend jeweils getrennt oder als einheitlicher Strom der Brennkammer zugeführt, was sich insbesondere vorteilhaft auf die Steuer- und Regelbarkeit der Gasturbine auswirkt.

Die mit der Erfindung erzielten Vorteile bestehen insbesondere darin, daß durch Zuführen von Brennstoff durch im Innenraum der Schaufeln ausgebildete Hohlräume, welche ein gegenüber dem Inneren der Gasturbine geschlossenes System bilden, der Brennstoff thermische Energie aufnimmt, die sonst mittels eines Kühlfluides abgeführt werden müßte. Während man so einerseits durch Erwärmung des Brennstoffs eine Verminderung des Brennstoffverbrauches bewirkt, spart man andererseits Kühlluft für die Turbine und vermindert die Arbeit des Luftverdichters, die sonst von der Turbine aufgebracht werden müßte. Demzufolge wird der Wirkungsgrad der Gasturbine erhöht. Zusätzlich werden Wirkungsgradverluste in der Turbine durch Mischung von heißem Aktionsfluid mit Kühlluft dadurch reduziert, daß nur noch vermindert Kühlluft an den Schaufeln austritt.

Weitere Vorteile und Einzelheiten der Erfindung werden anhand eines in der Zeichnung dargestellten, bevorzugten Ausführungsbeispiels einer Gasturbine erläutert.

Es zeigen:
- Fig. 1: schematisiert eine erfindungsgemäße Gasturbine; und
- Fig. 2: schematisiert eine bevorzugt verwendete Schaufel einer Gasturbine nach Fig. 1 in einem Querschnitt.

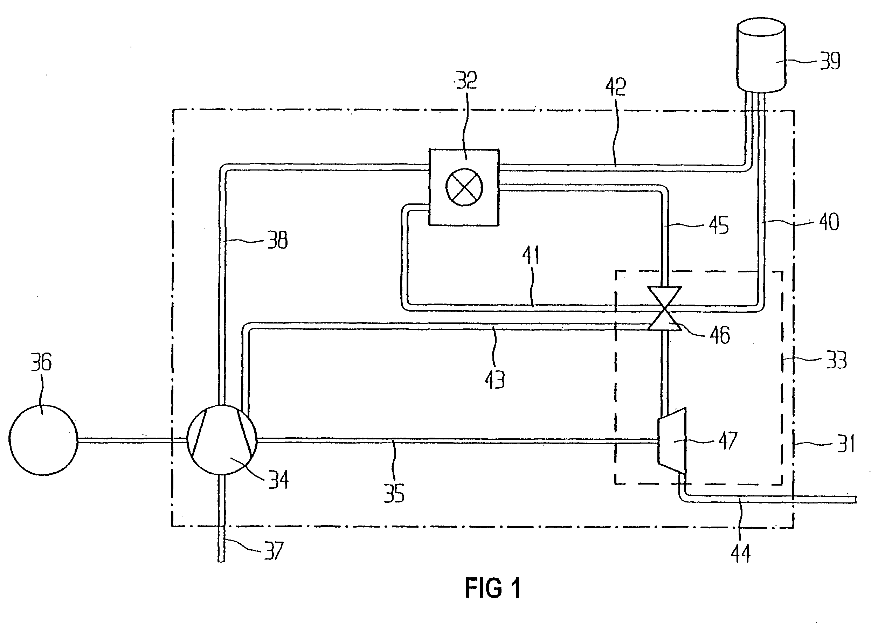

Figur 1 zeigt schematisiert eine Gasturbine 31. Diese umfaßt eine Turbine 33 mit über eine Turbinenwelle 35 angekoppelten Luftverdichter 34 und Generator 36. Sie umfaßt weiter eine der Turbine 33 vorgeschaltete Brennkammer 32. Der Luftverdichter 34 weist saugseitig eine Ansaugleitung 37 und druckseitig wenigstens eine Kühlluftleitung 43 auf, die in die Turbine 33 mündet. Der Luftverdichter 34 weist außerdem druckseitig eine Brennluftleitung 38 auf, die in die Brennkammer 32 mündet.

Für den vorzuwärmenden Brennstoffanteil führt eine Brennstoffleitung 40 von einer Versorgungseinheit 39 zur Turbine 33. Desweiteren ist an die Turbine 33 eine Brennstoffleitung 41 für den vorgewärmten Brennstoff 6 angeschlossen. Die Turbine 33 weist außerdem eine Abgasleitung 44 auf. Eine Rauchgasleitung 45 verbindet die Brennkammer 32 mit der Turbine 33. Darüber hinaus ist die Brennkammer 32 auch direkt über eine Brennstoffleitung 42 mit der Versorgungseinheit 39 verbunden.

Die Turbine 33 umfaßt zumindest zwei Reihen 46, 47 von Schaufeln 1, insbesondere ein Leitrad 46 und ein Laufrad 47. Im Innenraum 21 der Schaufeln 1 sind Hohlräume 20, 22, 22a, 23, 23a ausgebildet. Diese im Innern der Schaufeln 1 ausgebildeten Hohlräume 20, 22, 22a, 23, 23a bilden zumindest in einem Teilbereich der Schaufeln 1 ein gegenüber dem Inneren der Gasturbine 31 geschlossenes System. In einem weiteren Teilbereich der Schaufeln 1 bilden andere, im Inneren der Schaufeln 1 ausgebildete Hohlräume 25, 25a ein offenes System.

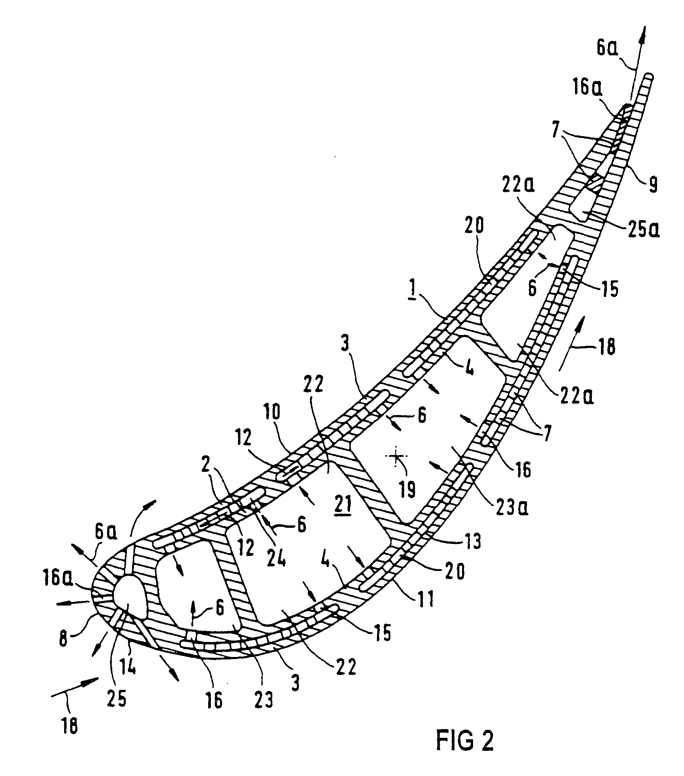

Figur 2 zeigt schematisiert unter Darstellung der für die Erläuterung verwendeten konstruktiven und funktionellen Merkmale eine bevorzugt verwendete Schaufel 1 einer Gasturbine 31 in einem Querschnitt, welche sich entlang einer Hauptachse 19 erstreckt. Die Schaufel 1 kann entlang der Hauptachse 19 gekrümmt, verwunden sowie verdreht sein, so daß sich der in der Figur 2 dargestellte Querschnitt der Schaufel 1 über der Hauptachse 19 verändern kann. Die Schaufel 1 weist an einem nicht dargestellten Ende einen Schaufelfuß zur Befestigung auf. Die Schaufel 1 weist eine Wandstruktur 2 auf mit einem Anströmbereich 8, einem Abströmbereich 9 sowie einer Druckseite 10 und einer Saugseite 11, die einander gegenüber angeordnet sind. Die Wandstruktur 2 weist zudem eine Außenwand 3 auf, die einen Innenraum 21 umschließt. In diesem Innenraum 21 sind strömungstechnisch voneinander getrennt liegende Hohlräume 20, 22, 22a, 23, 23a, 25, 25a, insbesondere Brennstoffzuführungen 22, 22a, Brennstoffabführungen 23, 23a sowie Kühlluftzuführungen 25, 25a vorgesehen, die jeweils im wesentlichen parallel zu der Hauptachse 19 gerichtet sind. Die genannten Zuführungen 22, 22a, 25, 25a und Abführungen 23, 23a erstrecken sich von dem nicht dargestellten Schaufelfuß bis zu einem dem ersten Ende der Schaufel 1 gegenüberliegenden nicht dargestellten zweiten Ende, wo sie verschlossen sind. Die Schaufel 1 wird von einem Heißgas 18 (Aktionsfluid) umströmt, so daß eine Außenoberfläche 14 der Außenwand 3 von dem Heißgas 18 beaufschlagbar ist. Das Heißgas 18 strömt die Schaufel 1 an dem Anströmbereich 8 an und strömt entlang der Schaufel 1 bis zu dem Abströmbereich 9. In der Strömungsrichtung des Heißgases 18 sind im Innenraum 21 nacheinander die Kühlluftzuführung 25 des Anströmbereichs 8, die Brennstoffabführung 23, die Brennstoffzuführung 22, die Brennstoffabführung 23a, die Brennstoffzuführung 22a sowie die Kühlluftzuführung 25a des Abströmbereiches 9 angeordnet. An der Saugseite 11 sowie der Druckseite 10 weist die Wandstruktur 2 eine Mehrzahl hintereinander angeordneter Kammern 20 auf. Weitere, nicht dargestellte, Kammern sind an der Saugseite 11 sowie an der Druckseite 10 in Richtung der Hauptachse 19 vorgesehen. Die Kammern 20 sind zwischen einer dem Innenraum 21 zugewandten Innenwand 4 und der Außenwand 3 angeordnet. Jede Kammer 20 weist einen jeweiligen Einlaß 15 für Brennstoff 6 auf, der jeweils mit einer zugeordneten Brennstoffzuführung 22, 22a verbunden ist. Der Einlaß 15 einer jeweiligen Kammer 20 erstreckt sich entlang einer Einlaßachse 24, die im wesentlichen senkrecht auf der Außenwand 3 steht. Hierdurch ist bei Einströmen des Brennstoffes 6 in die Kammer 20 eine zusätzliche Prallkühlung der Außenwand 3 erreichbar. Weiterhin weist jede Kammer 20 einen Auslaß 16 auf, der eine strömungstechnische Verbindung zwischen der Kammer 20 und einer zugeordneten Brennstoffabführung 23, 23a herstellt. Die Kammern 20 sind jeweils von dem Brennstoff 6 in Richtung oder entgegen der Strömungsrichtung des Heißgases 18 durchströmbar. Vorzugsweise sind in Strömungsrichtung 12 des Brennstoffes 6 in jeder Kammer 20 eine Mehrzahl einander nachgeordneter Wärmeübertragungselemente 7 angeordnet. Weitere in den Kammern 20 entlang der Achse 19 angeordnete Wärmeübertragungselemente 7 sind nicht dargestellt. Diese können gegenüber den dargestellten Wärmeübertragungselementen 7 in Strömungsrichtung 12 versetzt sein, wodurch eine hohe Wärmeübertragung in den Kammern 20 erreichbar ist.

Beim Betrieb der Gasturbine 31 wird der Brennkammer 32 über die Brennstoffleitung 42 ein erster Teilstrom, vorzugsweise fossilen, Brennstoffes 6, beispielsweise Erdgas oder Kohlegas, zugeführt. Darüber hinaus wird der Brennkammer 32 über die Brennstoffleitung 41 ein zweiter Teilstrom von Brennstoff 6 zugeführt, welcher in der Turbine 33 vorgewärmt wurde. Die Vorwärmung des Brennstoffes 6 erfolgt bevorzugt dadurch, indem der über die Brennstoffleitung 40 der Turbine 33 zugeführte Brennstoff 6 die im Innenraum 21 der Schaufeln 1 als ein gegenüber dem Inneren der Gasturbine 31 geschlossenes System ausgebildeten Hohlräume 20, 22, 22a, 23, 23a durchströmt und dabei thermische Energie aufnimmt. Dazu strömt der Brennstoff 6 an dem in Figur 2 nicht dargestellten ersten Ende in die Schaufel 1 ein und durchströmt die Schaufel 1 bis zu dem zweiten, ebenfalls nicht dargestellten Ende. Von dem Brennstoff 6 wird jeweils ein Teil in jede axial übereinander angeordnete Kammer 20 so abgeführt, daß er über einen Wärmeaustausch mit der Außenwand 3 sowie den Wärmeübertragungselementen 7 Wärme aufnimmt, wodurch der Brennstoff 6 vorgewärmt und gleichzeitig die Außenwand 3 gekühlt wird. Nach Durchströmen der Kammer 20 tritt der Brennstoff 6 in eine Brennstoffabführung 23, 23a ein. Der in den Brennstoffabführungen 23, 23a wieder vereinigte Brennstoffstrom gelangt durch das nicht dargestellte erste Ende wieder aus der Schaufel 1 heraus.

Der Brennstoff 6 wird entweder nacheinander, durch mehrere, insbesondere durch alle, Reihen 46, 47 von Schaufeln 1 der Turbine 33 oder separat, d. h. in getrennten Strömen durch mehrere Reihen 46, 47 von Schaufeln 1 der Turbine 33 und anschließend jeweils getrennt oder als einheitlicher Strom der Brennkammer 32 zugeführt.

Die Aufteilung des Brennstoffes 6 in Teilströme ermöglicht in vorteilhafter Weise eine bessere lastabhängige Steuer- und Regelbarkeit der Turbine 33.

In einem bevorzugten Ausführungsbeispiel sind Brennstoffleitungen 40, 41, 42 und die im Innenraum 21 der Schaufeln 1 als ein gegenüber dem Inneren der Gasturbine 31 geschlossenes System ausgebildeten Hohlräume 20, 22, 22a, 23, 23a so ausgelegt, daß der Brennstoff 6 überwiegend, bestenfalls insgesamt, vorgewärmt der Brennkammer 32 zugeführt wird.

Der so vorgewärmte Brennstoff 6 wird zusammen mit dem ggf. über die Brennstoffleitung 42 direkt zugeführten Brennstoff und der verdichteten Brennluft oder mit Frischluft in der Brennkammer 32 verbrannt. Das bei der Verbrennung entstehende heiße Rauchgas 18 (Aktionsfluid) wird über die Rauchgasleitung 45 in die Turbine 33 geleitet. Dort entspannt sich das Rauchgas und treibt die Turbine 33 an. Diese wiederum treibt den Luftverdichter 34 und den Generator 36 an. Das Rauchgas 18 verläßt die Turbine 33 als Abgas über die Abgasleitung 44 in Richtung auf einen (nicht dargestellten) Kamin. Alternativ kann das Abgas vorzugsweise auch zur Erzeugung von Dampf in einem Abhitzedampferzeuger einer Gas- und Dampfturbinenanlage genutzt werden. Eine derartige Gas- und Dampfturbinenanlage ist z.B. aus der EP 0 410 111 B1 bekannt.

Das Rauchgas 18 weist bei Eintritt in die Turbine 33 eine hohe Temperatur von mehr als 1100°C auf. Daher müssen Teile der Turbine 33, insbesondere die Schaufeln 1, zusätzlich gekühlt werden. Ein Großteil der abzuführenden thermischen Energie wird in den brennstoffdurchströmten Teilbereichen der Schaufeln 1 vom Brennstoff 6 aufgenommen und abgeführt. In den verbleibenden Teilbereichen der Schaufeln 1, insbesondere im Anströmbereich 8 und Abströmbereich 9, durchströmt Kühlluft 6a andere, im Innenraum 21 der Schaufeln 1 als offenes System ausgebildete Hohlräume 25, 25a, wobei die Kühlluftzuführung 25, wie in Figur 2 dargestellt, im Anströmbereich 8 eine Mehrzahl von Auslässen 16 aufweist, durch die Kühlluft 6a an die Außenoberfläche 14 der Schaufel 1 gelangt. Hierdurch ist eine zusätzliche Filmkühlung der Schaufeln 1 durch die Kühlluft 6a gewährleistet. Die Kühlluftzuführung 25a des Abströmbereiches 9 weist ebenfalls einen Auslaß 16a zur Ausströmung von Kühlluft 6a auf, wobei zwischen den Außenwänden der Saugseite 11 und der Druckseite 10 Wärmeübertragungselemente 7 angeordnet sind.

Alternativ oder kumulativ kann zur Temperaturerhöhung des aus der Turbine 33 ausströmenden Abgases der Kühlluft 6a geringe Anteile an Brennstoff 6 beigemischt werden, die in der Turbine 33 verbrennen.

Die in der Turbine 33 bevorzugt verwendeten Schaufeln 1 zeichnen sich dadurch aus, daß die Außenwand 3 der Schaufeln 1 an der Saugseite 11 und der Druckseite 10 ein gegenüber dem Inneren der Gasturbine 31 geschlossenes System aufweisen, durch das wenigstens ein Teil des Brennstoffes 6 vor seiner Einleitung in die Brennkammer 32 strömt, die Schaufeln 1 kühlt und dabei gleichzeitig vorgewärmt wird, ohne in die Strömung eines die Schaufel 1 umströmenden heißen Aktionsfluides 18 zu gelangen. Zusätzlich können Anströmbereich 8 und Abströmbereich 9 der Schaufeln 1 mit einem offenen System gekühlt werden, wobei vorzugsweise Kühlluft verwendet wird.

Die Erfindung zeichnet sich dadurch aus, daß durch Zuführen von Brennstoff 6 durch im Innenraum 21 der Schaufeln 1 ausgebildete Hohlräume 20, 22, 22a, 23, 23a, welche ein gegenüber dem Inneren der Gasturbine 31 geschlossenes System bilden, der Brennstoff 6 thermische Energie aufnimmt, die sonst mittels eines Kühlfluides abgeführt werden müßte. Während man so einerseits durch Erwärmung des Brennstoffs 6 eine Verminderung des Brennstoffverbrauches bewirkt, spart man andererseits Kühlluft 6a für die Turbine 33 und vermindert die Arbeit des Luftverdichters 34, die sonst von der Turbine 33 aufgebracht werden müßte. Demzufolge wird der Wirkungsgrad der Gasturbine 31 erhöht. Zusätzlich werden Wirkungsgradverluste in der Turbine 33 durch Mischung von heißem Aktionsfluid 18 mit Kühlluft 6a dadurch reduziert, daß nur noch vermindert Kühlluft 6a an den Schaufeln 1 austritt.

## Patentansprüche

1. Verfahren zum Betreiben einer Gasturbine (31) mit einer Brennkammer (32), einer zumindest zwei Reihen (46, 47) von Schaufeln (1) umfassenden Turbine (33) und einem Luftverdichter (34), wobei der Brennkammer (32) verdichtete Luft und Brennstoff (6) und der Turbine (33) Kühlluft (6a) zugeführt werden, **dadurch gekennzeichnet, daß** wenigstens ein Teil des Brennstoffes (6) vor seiner Einleitung in die Brennkammer (32) im Innenraum (21) der Schaufeln (1) ausgebildete erste Hohlräume (20, 22, 22a, 23, 23a) zumindest in einem Teilbereich der Schaufeln (1) durchströmt und dabei gleichzeitig vorgewärmt wird, und daß die der Turbine (33) zugeführte Kühlluft (6a) im Innenraum (21) der Schaufeln (1) ausgebildete zweite Hohlräume (25, 25a) in einem weiteren Teilbereich der Schaufeln (1) durchströmt und wenigstens teilweise an den Schaufeln (1) austritt.

2. Verfahren nach Anspruch 1,
**dadurch gekennzeichnet, daß** die in den Schaufeln (1) ausgebildeten Hohlräume (20, 22, 22a, 23, 23a), in denen der Brennstoff (6) strömt, als gegenüber dem Inneren der Gasturbine (31) geschlossenes System ausgebildet werden.

3. Verfahren nach Anspruch 1 oder 2,
**dadurch gekennzeichnet, daß** der Brennstoff (6) nacheinander mehrere, insbesondere alle, Reihen (46, 47) von Schaufeln (1) durchströmt und anschließend der Brennkammer (32) zugeführt wird.

4. Verfahren nach Anspruch 1 oder 2,
**dadurch gekennzeichnet, daß** der Brennstoff (6) in getrennten Teilströmen durch mehrere Reihen (46, 47) von Schaufeln (1) und anschließend jeweils getrennt oder als einheitlicher Strom der Brennkammer (32) zugeführt wird.

5. Verfahren nach einem der Ansprüche 1 bis 4,
**dadurch gekennzeichnet, daß** die Kühlluft (6a) so an den Schaufeln (1) austritt, daß sich auf der Außenoberfläche (14) der Schaufeln (1) ein Luftfilm ausbildet.

6. Verfahren nach einem der Ansprüche 1 bis 5,
**dadurch gekennzeichnet, daß** zur Temperaturerhöhung des aus der Turbine (33) ausströmenden Abgases der Kühlluft (6a) geringe Anteile an Brennstoff beigemischt werden, die in der Turbine (33) verbrennen.

7. Gasturbine (31), insbesondere zur Durchführung des Verfahrens nach einem der vorherigen Ansprüche, mit einer Brennkammer (32), einer zumindest zwei Reihen (46, 47) von Schaufeln (1) umfassenden Turbine (33) und einem Luftverdichter (34) sowie einer Brennluftleitung (38) zum Zuführen von verdichteter Luft und wenigstens einer Brennstoffleitung (40, 41, 42) zum Zuführen von Brennstoff (6) in die Brennkammer (32) sowie wenigstens einer Kühlluftleitung (43) zum Zuführen von Kühlluft (6a) in die Turbine (33),
**dadurch gekennzeichnet, daß** wenigstens ein Teil des Brennstoffes (6) von einer Versorgungseinheit (39) durch im Innenraum (21) der Schaufeln (1) ausgebildete erste Hohlräume (20, 22, 22a/ 23, 23a), welche zumindest in einem Teilbereich der Schaufeln (1) ein gegenüber dem Inneren der Gasturbine (31) geschlossenes System bilden, zur Brennkammer (32) geführt ist, und daß wenigstens ein Teil der Kühlluft (6a) durch im Innenraum (21) der Schaufeln (1) ausgebildete zweite Hohlräume (25, 25a) geführt ist.

8. Gasturbine (31) nach Anspruch 7,
**dadurch gekennzeichnet, daß** der Brennstoff (6) nacheinander durch mehrere, insbesondere durch alle, Reihen (46, 47) von Schaufeln (1) der Brennkammer (32) zugeführt ist.

9. Gasturbine (31) nach Anspruch 7 oder 8,
**dadurch gekennzeichnet, daß** der Brennstoff (6) separat durch mehrere Reihen (46, 47) von Schaufeln (1) und anschließend jeweils getrennt oder als einheitlicher Strom der Brennkammer (32) zugeführt ist.

## Claims

1. Method of operating a gas turbine (31) having a combustion chamber (32), a turbine (33) comprising at least two rows (46, 47) of blades (1), and an air compressor (34), compressed air and fuel (6) being fed to the combustion chamber (32) and cooling air (6a) being fed to the turbine (33), **characterized in that** at least one portion of the fuel, before it is introduced into the combustion chamber (32), flows at least in a section of the blades (1) through first cavities (20, 22, 22a, 23, 23a) formed in the interior of said blades (1) and in the process is preheated at the same time, and **in that** the cooling air (6a) fed to the turbine (33) flows in a further section of the blades (1) through second cavities (25, 26a) formed in the interior space (21) of said blades (1) and discharges at least partly at the blades (1).

2. Method according to Claim 1, **characterized in that** the cavities (20, 22, 22a, 23, 23a) which are formed in the blades (1) and in which the fuel (6) flows are designed as a closed system relative to the interior of the gas turbine (31).

3. Method according to Claim 1 or 2, **characterized in that** the fuel (6) successively flows through a plurality of rows (46, 47), in particular through all the rows, of blades (1) and is then fed to the combustion chamber (32).

4. Method according to Claim 1 or 2, **characterized in that** the fuel (6) is fed in separate partial flows through a plurality of rows (46, 47) of blades (1) and is then in each case fed separately or as a uniform flow to the combustion chamber (32).

5. Method according to Claims 1 to 4, **characterized in that** the cooling air (6a) discharges at the blades (1) in such a way that an air film forms on the outer surface (14) of the blades (1).

6. Method according to Claims 1 to 5, **characterized in that** small fractions of fuel (6), which burn in the turbine (33), are admixed with the cooling air (6a) in order to increase the temperature of the exhaust gas flowing out of the turbine (33).

7. Gas turbine (31), in particular for carrying out the method according to one of the preceding claims, having a combustion chamber (32), a turbine (33) comprising at least two rows (46, 47) of blades (1), and an air compressor (34), and also a combustion-air line (38) for feeding compressed air and at least one fuel line (40, 41, 42) for feeding fuel (6) into the combustion chamber (32), and also at least one cooling-air line (43) for feeding cooling air (6a) into the turbine (33), **characterized in that** at least a portion of the fuel (6) is directed to the combustion chamber (32) from a supply unit (39) through first cavities (20, 22, 22a, 23, 23a) which are formed in the interior space (21) of the blades (1) and which, at least in a section of the blades (1), form a closed system relative to the interior of the gas turbine (31), and **in that** at least one portion of the cooling air (6a) is directed through second cavities (25, 25a) formed in the interior space (21) of the blades (1).

8. Gas turbine (31) according to Claim 7, **characterized in that** the fuel (6) is fed successively through a plurality of rows (46, 47), in particular through all the rows, of blades (1) to the combustion chamber (32).

9. Gas turbine (31) according to Claim 7 or 8, **characterized in that** the fuel (6) is fed separately through a plurality of rows (46, 47) of blades (1) and then in each case separately or as a uniform flow to the combustion chamber (32).

## Revendications

1. Procédé pour faire fonctionner une turbine (31) à gaz ayant une chambre (32) de combustion, une turbine (33) comprenant au moins deux rangées (46, 47) d'aubes (1 ) et un compresseur (34) d'air, de l'air comprimé et du combustible étant apportés à la chambre (32) de combustion et de l'air (6a) de refroidissement à la turbine (33), **caractérisé en ce qu'**au moins une partie du combustible (6) passe avant son entrée dans la chambre (32) de combustion dans de premières cavités (20, 22, 22a, 23, 23a) constituées à l'intérieur (21) des aubes (1) au moins dans une partie des aubes (1) et étant ainsi en même temps préchauffée, et **en ce que** l'air (6a) de refroidissement apporté à la turbine (33) passe dans des deuxièmes cavités (25, 25a) constituées à l'intérieur (21) des aubes dans une autre partie des aubes (1 ) et sort au moins en partie sur les aubes (1).

2. Procédé suivant la revendication 1,
**caractérisé en ce que** les cavités (20, 22, 22a, 23, 23a), constituées dans les aubes (1) et dans lesquelles passe le combustible (6), sont constituées sous la forme d'un système fermé par rapport à l'intérieur de la turbine (31) à gaz.

3. Procédé suivant la revendication 1 ou 2,
**caractérisé en ce que** le combustible (6) passe successivement dans plusieurs, notamment dans toutes les rangées (46, 47) d'aubes, et est envoyé ensuite dans la chambre (32) de combustion.

4. Procédé suivant la revendication 1 ou 2,
**caractérisé en ce que** le combustible (6) est apporté en courants partiels distincts dans plusieurs rangées (46, 47) d'aubes (1) et ensuite respectivement sous la forme d'un courant distinct ou unitaire à la chambre (32) de combustion.

5. Procédé suivant l'une des revendications 1 à 4,
**caractérisé en ce que** l'air (6a) de refroidissement sort des aubes (1) de façon à ce qu'il se forme sur la surface (14) extérieure des aubes (1 ) une pellicule d'air.

6. Procédé suivant l'une des revendications 1 à 5,
**caractérisé en ce que**, pour élever la température du gaz sortant de la turbine, on mélange à l'air (6a) de combustion de petites proportions de combustibles qui sont brûlées dans la turbine (33).

7. Turbine (31) à gaz, notamment pour la mise en oeuvre du procédé suivant l'une des revendications précédentes, comprenant une chambre (32) de combustion, une turbine (33) comprenant au moins deux rangées (46, 47) d'aubes (1) et un compresseur (34) d'air, ainsi qu'un conduit (38) pour de l'air de combustion pour apporter de l'air comprimé et au moins un conduit (40, 41, 42) pour du combustible pour apporter du combustible (6) à la chambre (32) de combustion, ainsi qu'au moins un conduit (43) pour de l'air de refroidissement pour apporter de l'air (6a) de refroidissement à la turbine (33),
**caractérisée en ce que** au moins une partie du combustible (6) est envoyée d'une unité (39) d'alimentation en passant par des premières cavités (20, 22, 22a, 23, 23a) qui sont constituées à l'intérieur (21 ) des aubes (1) et qui forment, au moins dans une partie des aubes (1), un système fermé par rapport à l'intérieur de la turbine (31) à gaz, à la chambre (32) de combustion, et **en ce que** au moins une partie de l'air (6a) de refroidissement passe dans des deuxièmes cavités (25, 25a) constituées à l'intérieur (21 ) des aubes (1).

8. Turbine (31) à gaz suivant la revendication 7,
**caractérisée en ce que** le combustible (6) passe successivement dans plusieurs notamment dans toutes les rangées (46, 47) d'aubes, et est envoyé ensuite à la chambre (32) de combustion.

9. Turbine (31) à gaz suivant la revendication 7 ou 8,
**caractérisée en ce que** le combustible (6) est apporté en courants partiels distincts dans plusieurs rangées (46, 47) d'aubes (1) et ensuite respectivement sous la forme d'un courant distinct ou unitaire à la chambre (32) de combustion.
